# EUROPEAN PATENT APPLICATION

(11) **EP 2 725 673 A1**
(43) Date of publication of application: **30.04.2014**
(21) Application number: 13189838.9
(22) Date of filing: 23.10.2013
(51) Int. Cl.: H02H 9/00, H02H 9/02

(54) **Circuit input protection device and method of assembling the same**

(30) Priority: 26.10.2012 US 201213661758
(71) Applicant: Unison Industries LLC, Jacksonville, FL 32256 (US)
(72) Inventor: Cook, Robert Wake, Jacksonville, FL Florida 32256 (US)
(74) Representative: Williams, Andrew Richard

(57) **Abstract**

A circuit input protection device (100) and methods of assembling the same are provided. The circuit input protection device (100) includes a current limiting device (102) configured to limit inrush current to a target circuit (402) and a diode (104) coupled to the current limiting device (102).

## Description

### BACKGROUND

The field of the disclosure relates generally to inrush current protection, and more particularly relates to limiting inrush currents using a circuit input protection device when power is initially supplied to an electronic circuit.

At least some known electrical systems and/or devices include inrush current protection circuits for limiting current surges than may damage or destroy components of the systems. Large inrush currents are usually due to the presence of large decoupling capacitors on power supply lines for improving power regulation, reducing electrical noise, and/or preventing electromagnetic radiation. When such capacitors are connected to a power supply with low impedance, current flows, which charges the capacitors up to the voltage potential of the power supply. Inrush currents are limited only by circuit resistances, which are generally very low, enabling inrush currents to easily exceed destructive levels of the electrical components.

Typically, inrush current is addressed by building switching circuits to power up the circuit in stages, or large chokes are used to counteract the draw of power supply capacitors. Various types of circuits have been employed to reduce inrush currents. For example, one known method of reducing inrush current is to couple a resistor in series with the supply capacitor to limit current through the capacitor. Once the capacitor is charged, a switch is thrown to short the resistor and enable the capacitor to decouple the alternating current (AC) noise on the power supply. However, this method requires additional circuitry (i.e., the resistor, the switch, and the logic to throw the switch once charging is accomplished), which can be bulky and/or costly. Another method of reducing inrush current includes using series-coupled inductors to limit inrush current. Although the inductors provide additional supply filtering, they can be quite large and expensive for a power supply that requires significant power.

### BRIEF DESCRIPTION

In one aspect, a circuit input protection device is provided. The circuit input protection device includes a current limiting device configured to limit inrush current to a target circuit and a diode coupled to the current limiting device.

In another aspect, a method is provided method for assembling a circuit input protection device. The method includes providing a current limiting device configured to limit inrush current and coupling a diode to the current limiting device.

In yet another aspect, a system is provided. The system includes a power supply, a target circuit configured to receive power from the power supply, and a circuit input protection device coupled between the power supply and the target circuit. The power supply includes a positive power supply lead and a negative power supply lead. The circuit input protection device includes a current limiting device configured to limit inrush current to a target circuit and a diode coupled to the current limiting device.

### BRIEF DESCRIPTION OF THE DRAWINGS

Fig. 1 is a block diagram of an exemplary circuit input protection device.
Fig. 2 is a schematic diagram of an exemplary current limiting device that may be used with the circuit input protection device shown in Fig. 1.
Fig. 3 is a schematic diagram of an alternative current limiting device that may be used with the circuit input protection device shown in Fig. 1.
Fig. 4 is a block diagram of an exemplary electronic system in which the circuit input protection device shown in Fig. 1 may be used to protect a target circuit.
Fig. 5 is a flowchart of an exemplary method of assembling the circuit input protection device shown in Fig. 1.

### DETAILED DESCRIPTION

The embodiments described herein relate to inrush current protection. More particularly, the embodiments relate to limiting inrush currents using a circuit input protection device when power is initially supplied to an electronic circuit. In general, the exemplary embodiments provide a device that may be installed on a power supply lead of any existing electronic circuit. The device reduces the risk of circuit destruction due to accidental reverse biasing and/or large signal transients (such as lightning strikes) on a power supply and reduces excess inrush current from damaging circuit components by limiting the current drawn by large bypass filter capacitors or other components when power is initially supplied to the circuit. As a result, damage to circuit components cause by signal transients and/or inrush currents may be reduced. The methods and device described herein may be applied to any platform for which transient voltage and/or inrush current protection are desired. The device may be installed on new circuits or retrofitted for existing circuits. Moreover, the device provides a less-expensive, cost-efficient method of protecting a target circuit as compared to known methods. Furthermore, the embodiments described herein may be applied in a generalized manner to all types of electronic circuits.

As used herein, an element or step recited in the singular and proceeded with the word "a" or "an" should be understood as not excluding plural elements or steps unless such exclusion is explicitly recited. Furthermore, references to "one embodiment" of the present invention or the "exemplary embodiment" are not intended to be interpreted as excluding the existence of additional embodiments that also incorporate the recited features.

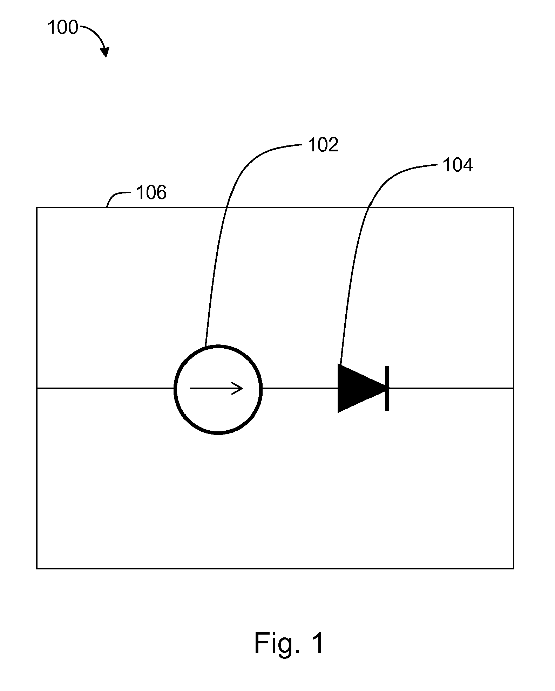

Fig. 1 is a block diagram of an exemplary circuit input protection device 100. In the exemplary embodiment, circuit input protection device 100 includes a high voltage current limiting device 102 coupled to a diode 104. More specifically, current limiting device 102 is coupled in series with diode 104. In the exemplary embodiment, current limiting device 102 is positioned upstream of diode 104, however, in alternative embodiments, current limiting device 102 may be positioned downstream of diode 104. In the exemplary embodiment, circuit input protection device 100 is integrated on a single circuit die 106, such as, for example, a single integrated semiconductor die. Alternatively, circuit input protection device 100 may be implemented using discrete components. In the exemplary embodiment, circuit input protection device 100 is fabricated using silicon carbide (SiC) technology. However, circuit input protection device 100 is not limited to such material, but could be adapted to any other known semiconductor processes that enable circuit input protection device 100 to function as described herein.

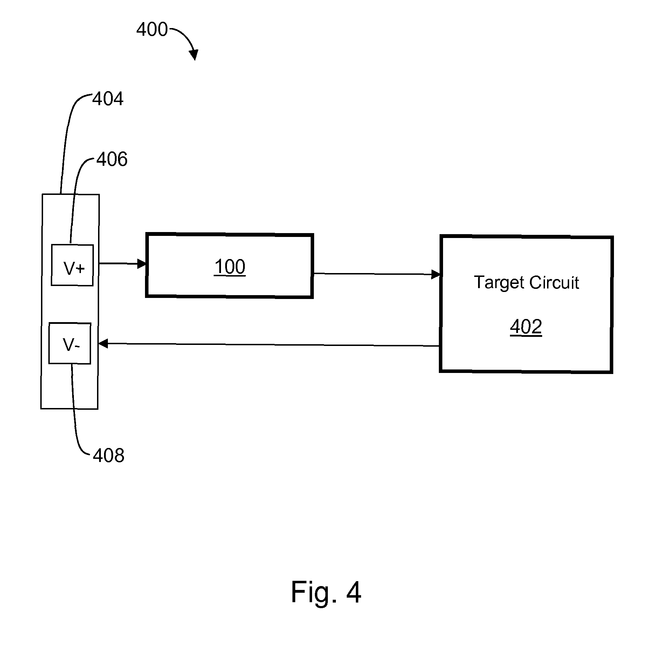

In the exemplary embodiment, diode 104 is a rectifier diode configured to protect a target circuit (shown in Fig. 4). More specifically, in the exemplary embodiment, diode 104 prevents damage from, for example, an inadvertent reverse polarity connection or a reverse bias, which may be caused by accidental misapplication of a power supply, and/or negative transients due to electromechanical noise, lightning, etc.

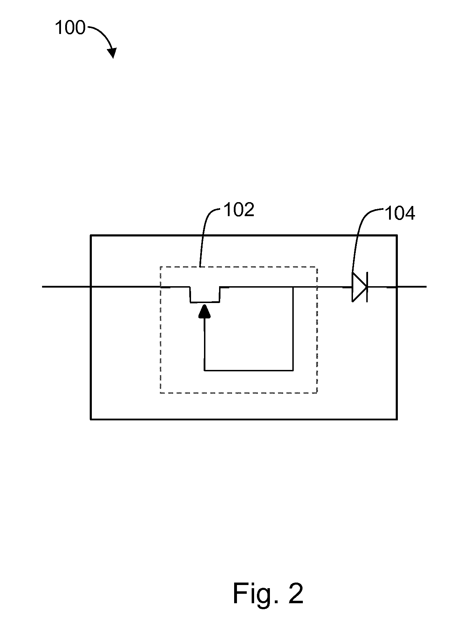

In the exemplary embodiment, current limiting device 102 prevents excessive inrush current during power up and during transients due to power line disturbances and/or lightning strikes. Fig. 2 is a schematic diagram of an exemplary current limiting device 102 (shown in Fig. 1) that may be used with circuit input protection device 100 (shown in Fig. 1). In the exemplary embodiment, current limiting device 102 includes a depletion N-channel junction gate field effect transistor (JFET) with a gate terminal of the JFET electrically coupled to a source terminal of the JFET. In the exemplary embodiment, current limiting device 102 is coupled in series with a diode, for example, diode 104 (shown in Fig. 1) on a single die, for example die 106 (shown in Fig. 1).

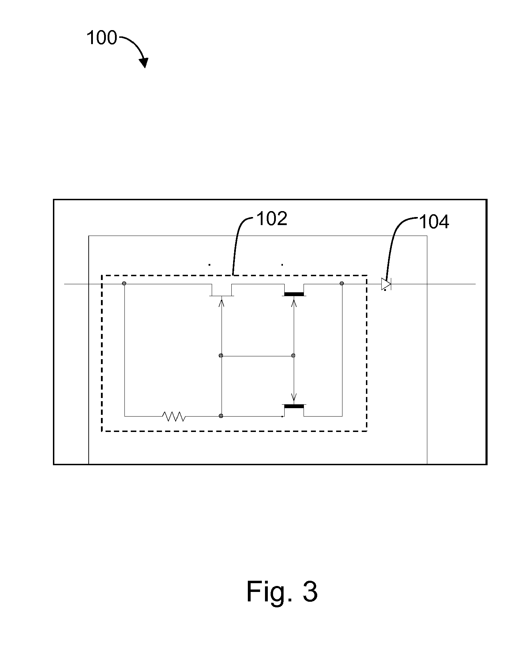

Fig. 3 is a schematic diagram of an alternative current limiting device 102 (shown in Fig. 1) that may be used with circuit input protection device 100 (shown in Fig. 1). In the exemplary embodiment, current limiting device 102 includes a cascode current source in series with a diode, for example, diode 104 (shown in Fig. 1) on a single die, for example die 106 (shown in Fig. 1). The current limiting devices shown in Figs. 2 and 3 are exemplary and are not intended to be limiting. As such, any known current limiting device may be used that enables circuit input protection device 100 to function as described herein.

Fig. 4 is a block diagram of an exemplary electronic system 400 in which circuit input protection device 100 (shown in Fig. 1) may be used to protect a target circuit 402. In the exemplary embodiment, electronic system 400 includes a power supply 404 configured to provide power to target circuit 402. More specifically, in the exemplary embodiment, power supply 404 is a direct current (DC) power supply having a positive power supply lead 406 and a negative power supply lead 408. In the exemplary embodiment, circuit input protection device 100 is coupled to positive power supply lead 406 of power supply 404 for protecting target circuit 402 from inrush current. In an alternative embodiment, circuit input protection device 100 may be coupled to negative power supply lead 408 of power supply 404.

During operation, circuit input protection device 100 presents a low impedance to power supply 404 while the current flowing through circuit input protection device 100 remains below a current limit threshold of current limiting device 102 (shown in Fig. 1). When target circuit 402 downstream of current limiting device 102 attempts to draw more current than the threshold, current limiting device 102 limits the current to a predetermined value and dissipates any excess voltage. For example, in case of a large voltage transient on positive supply lead 406, current limiting device 102 limits the current to target circuit 402 and dissipates the bulk of the transient across itself, preventing damage to target circuit 402. In the exemplary embodiment, diode 104 (shown in Fig. 1) prevents damage from, for example, an inadvertent reverse polarity connection or a reverse bias, which may be caused by accidental misapplication of a power supply, and/or negative transients due to electromechanical noise, lightning, etc.

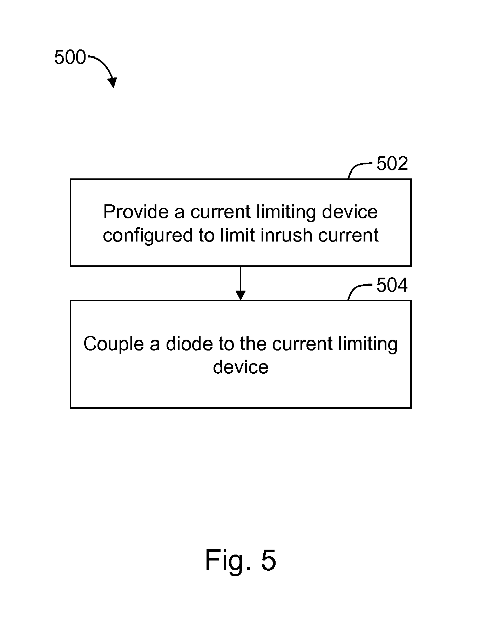

Fig. 5 is a flowchart 500 of an exemplary method of assembling a circuit input protection device, for example, circuit input protection device 100 (shown in Fig. 1). In the exemplary embodiment, circuit input protection device 100 is coupled between a power supply and a target circuit.

In the exemplary embodiment, the method includes providing 502 a current limiting device, for example, current limiting device 102 (shown in Figs. 1-3) configured to limit inrush current.

In the exemplary embodiment, the method further includes coupling 504 a diode, for example, diode 104 (shown in Fig. 1) to current limiting device 102. More specifically, in the exemplary embodiment, diode 104 is coupled to current limiting device in series. In the exemplary embodiment, current limiting device 102 and diode 104 are coupled on a single circuit die. In an alternative embodiment, current limiting device 102 and diode 104 are coupled as multiple discrete components.

The exemplary methods and systems described herein relate to inrush current protection. More particularly the exemplary embodiments relate to limiting inrush currents using a circuit input protection device when power is initially supplied to an electronic circuit. In general, the exemplary embodiments provide a device that may be installed on a power supply lead of any existing electronic circuit. The device reduces the risk of circuit destruction due to accidental reverse biasing and/or large signal transients (such as lightning strikes) on a power supply and reduces excess inrush current from damaging circuit components by limiting the current drawn by large bypass filter capacitors or other components when power is initially supplied to the circuit. As a result, damage to circuit components cause by signal transients and/or inrush currents may be reduced. The methods and device described herein may be applied to any platform for which transient voltage and/or inrush current protection are desired. The device may be installed on new circuits or retrofitted for existing circuits. Moreover, the device provides a less-expensive, cost-efficient method of protecting a target circuit as compared to known methods. Furthermore, the embodiments described herein may be applied in a generalized manner to all types of electronic circuits.

The description of the different advantageous embodiments has been presented for purposes of illustration and description, and is not intended to be exhaustive or limited to the embodiments in the form disclosed. Many modifications and variations will be apparent to those of ordinary skill in the art. Further, different advantageous embodiments may provide different advantages as compared to other advantageous embodiments. The embodiment or embodiments selected are chosen and described in order to best explain the principles of the embodiments, the practical application, and to enable others of ordinary skill in the art to understand the disclosure for various embodiments with various modifications as are suited to the particular use contemplated. This written description uses examples to disclose various embodiments, which include the best mode, to enable any person skilled in the art to practice those embodiments, including making and using any devices or systems and performing any incorporated methods. The patentable scope is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Various aspects and embodiments of the present invention are defined by the following numbered clauses:
1. A circuit input protection device comprising:
   a current limiting device configured to limit inrush current to a target circuit; and
   a diode coupled to said current limiting device.
2. A device in accordance with Clause 1, wherein said diode is coupled to said current limiting device in series.
3. A device in accordance with any preceding Clause, wherein said circuit input protection device comprises a single circuit die.
4. A device in accordance with any preceding Clause, wherein said circuit input protection device comprises multiple discrete components.
5. A device in accordance with any preceding Clause, wherein said current limiting device is configured to prevent excessive inrush current during power up of the target circuit.
6. A device in accordance with any preceding Clause, wherein said current limiting device is configured to protect the target circuit during transients caused by at least one of power line disturbances and lightning strikes.
7. A device in accordance with any preceding Clause, wherein said current limiting device comprises a depletion N-channel junction gate field effect transistor (JFET).
8. A device in accordance with any preceding Clause, wherein said current limiting device comprises a cascode current source.
9. A device in accordance with any preceding Clause, wherein said diode is configured to prevent damage from at least one of accidental misapplication of a power supply, voltage transients due to electromechanical noise, and voltage transients due to lightning.
10. A method of assembling a circuit input protection device, said method comprising:
   providing a current limiting device configured to limit inrush current; and
   coupling a diode to the current limiting device.
11. A method in accordance with any preceding Clause, further comprising coupling the current limiting device and the diode on a single circuit die.
12. A method in accordance with any preceding Clause, further comprising coupling the current limiting device and the diode as multiple discrete components.
13. A method in accordance with any preceding Clause, wherein coupling a diode to the current limiting device further comprises coupling the diode to the current limiting device in series.
14. A method in accordance with any preceding Clause, further comprising coupling the circuit input protection device between a power supply and a target circuit.
15. A system comprising:
   a power supply comprising a positive power supply lead and a negative power supply lead;
   a target circuit configured to receive power from said power supply; and
   a circuit input protection device coupled between said power supply and said target circuit, said circuit input protection device comprising:
      a current limiting device configured to limit inrush current to a target circuit; and
      a diode coupled to said current limiting device.
16. A system in accordance with any preceding Clause, wherein said circuit input protection device is coupled to the positive power supply lead of said power supply.
17. A system in accordance with any preceding Clause, wherein said diode is coupled to said current limiting device in series.
18. A system in accordance with any preceding Clause, wherein said current limiting device presents a low impedance to said power supply when current flowing through said circuit input protection device is below a current limit threshold of said current limiting device.
19. A system in accordance with any preceding Clause, wherein said current limiting device limits inrush current to a predetermined value when said target circuit draws a current that exceeds a current limit threshold of said circuit input protection device.
20. A system in accordance with any preceding Clause, wherein said current limiting device is configured to dissipate voltage transient from said power supply.

## Claims

1. A circuit input protection device (100) comprising:
a current limiting device (102) configured to limit inrush current to a target circuit (402); and
a diode (104) coupled to said current limiting device (102).

2. A device (100) in accordance with Claim 1, wherein said diode (104) is coupled to said current limiting device (102) in series.

3. A device (100) in accordance with either of Claim 1 or 2, wherein said circuit input protection device (100) comprises a single circuit die (106).

4. A device (100) in accordance with any preceding Claim, wherein said current limiting device (102) is configured to prevent excessive inrush current during power up of the target circuit (402).

5. A device (100) in accordance with any preceding Claim, wherein said current limiting device (102) is configured to protect the target circuit (402) during transients caused by at least one of power line disturbances and lightning strikes.

6. A device (100) in accordance with any preceding Claim, wherein said diode (104) is configured to prevent damage from at least one of accidental misapplication of a power supply (404), voltage transients due to electromechanical noise, and voltage transients due to lightning.

7. A system (400) comprising:
a power supply (404) comprising a positive power supply lead (404) and a negative power supply lead 408;
a target circuit (402) configured to receive power from said power supply (404); and
a circuit input protection device (100) coupled between said power supply (404) and said target circuit (402), said circuit input protection device (100) comprising:
a current limiting device (102) configured to limit inrush current to a target circuit (402); and
a diode (104) coupled to said current limiting device (102).

8. A system (400) in accordance with Claim 7, wherein said current limiting device (102) presents a low impedance to said power supply (404) when current flowing through said circuit input protection device (100) is below a current limit threshold of said current limiting device (102).

9. A system (400) in accordance with either of Claim 7 or 8, wherein said current limiting device (102) limits inrush current to a predetermined value when said target circuit (402) draws a current that exceeds a current limit threshold of said circuit input protection device (100).

10. A system (400) in accordance with any of Claims 7 to 9, wherein said current limiting device (102) is configured to dissipate voltage transient from said power supply (404).
